# EUROPEAN PATENT APPLICATION

(11) **EP 4 385 879 A1**
(43) Date of publication of application: **19.06.2024**
(21) Application number: 22213661.6
(22) Date of filing: 15.12.2022
(51) Int. Cl.: B63H 9/061, B63H 9/02, B63B 15/00

(54) **MARINE VESSEL INSTALLATION AND MARINE VESSEL**

(71) Applicant: AlfaWall Oceanbird AB, 147 80 Tumba (SE)
(72) Inventor: ALVÁN, Jonas, SE-167 64 BROMMA (SE)
(74) Representative: Alfa Laval Attorneys

(57) **Abstract**

The disclosure concerns a marine vessel installation (4) comprising a wind propulsion system (6) and an equipment enclosure (8). The wind propulsion system (6) comprises a base (10) and a wind engagement unit (12), the base (10) being configured to be arranged at a deck structure (14) to support the wind engagement unit (12), the wind propulsion system (6) further comprises at least a first hydraulic actuator (18). The wind propulsion system (6) further comprises a hydraulic power unit (20) arranged in the equipment enclosure (8). The wind propulsion system (6) further comprises hydraulic conduits (22) extending from the hydraulic power unit (20) to the first hydraulic actuator (18), the hydraulic conduits (22) extending between the equipment enclosure (8) and the first hydraulic actuator (18).

## Description

### TECHNICAL FIELD

The invention relates to a marine vessel installation and to a marine vessel.

### BACKGROUND

Sails have been known for a long time as means of propulsion of ships. Traditionally, flexible sails have been mounted on masts to harness the power of wind and propel the ship.

Modern marine vessels commonly use fossil fuels and combustion engines to propel the vessel. Use of wind propulsion has been suggested to reduce the overall consumption of fossil fuels. For this purpose, one or more wind engagement units can be used. Such wind engagement units may be common flexible sheet-formed sails, rigid sails of various kinds, rotor sails, wind turbines, or similar means.

The amount of propulsive power being generated is related to a number of interlinked factors, but surface area and other geometric aerodynamic characteristics are primary performance indicators.

For the purpose of controlling the propulsive power generated, one or more aspects of the wind engagement unit may be controllable. Some wind engagement units may be controllable to take an active position or an inactive position. In the active position, the wind engagement unit generates propulsive power. In the inactive position of the wind engagement unit, no propulsive power is generated or at least the propulsive power generated is largely reduced.

For example, US 2019/0216582 discloses a wingsail, in which relative positions of fore and aft aerofoils can be controlled, and which can be telescopically nested for hauling down and/or reefing the wingsail. EP 474363 discloses a rotor sail, which comprises a turbine with blades. Aspects of the blades, such as their relative position, are controllable. Also, the turbine as such is retractable in the rotor of the rotor sail. US 7766601 discloses a vertical-axis wind turbine which has a central rotary tower upon which are fixed substantially vertical blades. The blades are capable of rotating and moving radially relative to the central tower. The movement of each blade is controlled based on the conditions to which it is subjected so as to optimize the overall performance of the wind turbine. CN 109050856 discloses a bulk carrier comprising a wind propulsion device with rotatable drums utilizing the magnus effect. A mechanism swings the drums between an upright position with respect to a base when the wind energy propulsion device is in an operating state and a horizontal position with respect to the base when the wind energy propulsion device is in a maintenance state.

### SUMMARY

Accordingly, the mounting of a wind propulsion system on a marine vessel requires installation of both a wind engagement unit of the system and relevant control equipment for the wind engagement unit.

It would be advantageous to improve existing wind propulsion systems for marine vessels. In particular, it would be desirable to facilitate installation and/or maintenance of a wind propulsion system of a marine vessel. To better address one or more of these concerns, one or more of a marine vessel installation and a marine vessel having the features defined in at least one of the independent claims is provided.

According to an aspect, there is provided a marine vessel installation comprising a wind propulsion system and an equipment enclosure. The wind propulsion system comprises a base and a wind engagement unit, the base being configured to be arranged at a deck structure of a marine vessel and to support the wind engagement unit, and the wind engagement unit comprising at least one movable portion that is displaceable in relation to the base. The wind propulsion system further comprises at least a first hydraulic actuator arranged to engage with the at least one movable portion for displacement thereof in relation to the base. The wind propulsion system further comprises a hydraulic power unit arranged in the equipment enclosure, the hydraulic power unit being arranged for supplying hydraulic power at least to the first hydraulic actuator. The wind propulsion system further comprises hydraulic conduits extending from the hydraulic power unit to the first hydraulic actuator, the hydraulic conduits extending between the equipment enclosure and the first hydraulic actuator.

Since the marine vessel installation comprises the wind propulsion system and the equipment enclosure, since the wind propulsion system comprises at least the first hydraulic actuator, since the wind propulsion system comprises the hydraulic power unit arranged in the equipment enclosure, and since the wind propulsion system further comprises the hydraulic conduits extending between the equipment enclosure and the first hydraulic actuator - the marine vessel installation is configured for ease of installation aboard a marine vessel as well as for easily performing maintenance thereon.

Namely, by arranging the equipment enclosure aboard the marine vessel, the hydraulic power unit and thus, the power supply to the first hydraulic actuator is installed aboard the marine vessel as one module, while the base, optionally together with the wind engagement unit and the first hydraulic actuator, are installed as a separate module.

More specifically, the marine vessel installation comprising the base and the wind engagement unit on the one hand and the equipment enclosure with the hydraulic power unit arranged therein on the other hand forms a modular installation. Additionally, the equipment enclosure as such, may be of uncomplicated geometrical form and therefore, the relevant marine vessel may be more easily prepared for mounting of the marine vessel installation. Particularly, mounting of the equipment enclosure with its comparatively uncomplicated shape is easy in comparison with that of an often geometrically more complicated hydraulic power unit. Moreover, by accessing the equipment enclosure, service personnel can easily perform maintenance on the hydraulic power unit.

Even more ease of installation is provided when further equipment and/or components of the wind propulsion system are arranged in the equipment enclosure. For each further equipment/component of the wind propulsion system that is arranged in the equipment enclosure, and thus, being installable on the relevant marine vessel together with the equipment enclosure, the further equipment/component does not have to be installed separately on the marine vessel. Similarly, for each further equipment/component of the wind propulsion system that is arranged in the equipment enclosure, service personnel can easily access the further components e.g., for performing maintenance and/or system checks.

Whether retrofitting an existing marine vessel with a wind propulsion system or installing a wind propulsion system on a newly produced marine vessel, the advantage of ease of installation of the current marine vessel installation by utilising that the hydraulic power unit, and possibly further equipment/components of the wind propulsion system, being arranged within the equipment enclosure, is readily available.

It has been realised by the inventor that abord a marine vessel, at a deck thereof, mounting of a hydraulic power unit for, and/or control equipment of, a wind engagement unit is complicated due to the deck of each marine vessel being differently devised. Each marine vessel installation may have to be adapted to the individual layout of the relevant deck. Placing of the hydraulic power unit and/or control equipment may differ between each marine vessel and accordingly, the foundation of the hydraulic power unit and connections, such as the hydraulic conduits will have to be adapted for each individual marine vessel. The presently suggested modular marine vessel installation avoids this problem of varying and thus, costly mounting of a wind propulsion system, or at least considerably facilitates mounting of a wind propulsion system. The modular, and thus, at least to a certain degree standardised marine vessel installation will be easier to mount and therefore, provide a less costly installation. Moreover, a modular marine vessel installation may find easier acceptance in the shipping industry, in particular in the shipbuilding industry. Thus, the shipbuilding industry may prepare marine vessels for mounting of the equipment enclosure e.g., by providing a dedicated space at the deck structure with a foundation for the equipment enclosure.

It has further been realised by the inventor that a modular concept will provide benefits not only from an installation point of view but also to facilitate maintenance and/or refurbishing of the marine vessel installation once mounted aboard a marine vessel. When mounting a new marine vessel installation aboard a marine vessel, the entire equipment enclosure is lifted onto a deck structure of a relevant marine vessel and the hydraulic conduits between the hydraulic power unit and the first hydraulic actuator are connected. Furthermore, e.g., refurbishing of a current marine vessel installation may be performed by disconnecting the hydraulic conduits between the hydraulic power unit and the first hydraulic actuator and removing the currently mounted equipment enclosure. A new equipment enclosure is mounted, the hydraulic conduits are again connected, and the marine vessel is ready for use. The removed equipment enclosure may be overhauled away from the marine vessel and may be utilised for a different marine vessel installation, as a new or a replacement equipment enclosure.

The marine vessel installation is configured at least for contributing to the propulsion of a marine vessel, on which the marine vessel installation is mounted. The marine vessel may typically be a vessel used in seabound commercial transport of goods and/or passengers. However, the marine vessel may alternatively be a leisure yacht of the larger kind.

The wind propulsion system may herein alternatively be referred to as the propulsion system.

As mentioned above, the wind propulsion system comprises the wind engagement unit i.e., a unit adapted for engagement with wind. Additionally, the propulsion system comprises components for controlling the wind engagement unit, either for controlling its position between an active position and an inactive position and/or for controlling a position of at least a portion of the wind engagement unit in relation to the wind. Such components include the first hydraulic actuator and the hydraulic power unit. Such components may further include e.g., one or more further hydraulic actuator, hydraulic control equipment, valves, electronic control equipment, monitoring equipment, etc.

The base being configured to be arranged at a deck structure of a marine vessel means that the base is configured for securing the wind engagement unit directly to a deck of the marine vessel or indirectly to the deck, such as above or adjacent to the deck via e.g., a superstructure, a dedicated built structure, or similar of the marine vessel. The deck or the superstructure or the dedicated built structure may be reenforced specifically to withstand stress that the base and the wind engagement unit during use of the marine vessel installation may subject the deck and/or superstructure and/or dedicated built structure to. Thus, propulsive power produced by the wind engagement unit is transferred to the marine vessel via the base in order to contribute to the propulsion of the marine vessel. Accordingly, mounted for use aboard a marine vessel, the base being configured to support the wind engagement unit means that the wind engagement unit is connected, directly or indirectly, to a portion of the base, such as an upper portion of the base. A lower portion of the base is connected to the deck of the marine vessel, either directly or indirectly via e.g., a superstructure. For instance, such a structure may be configured to elevate the wind engagement unit a distance above the deck of the marine vessel.

The at least one movable portion of the wind engagement unit that is displaceable in relation to the base may be e.g., a movable portion configured for controlling a direction and/or a magnitude of a propulsive force produced by the wind engagement unit or the wind engagement unit as a whole, which may be displaceable between an active and an inactive position.

The base is separate from the equipment enclosure i.e., the base is an entity separate from the equipment enclosure. The hydraulic conduits and optionally, other conduits may extend between the equipment enclosure and e.g., the first hydraulic actuator at the base. Still, the base and the equipment enclosure are separate entities in the sense that they may be handled separately e.g., during mounting of the marine vessel installation aboard a marine vessel.

Herein, the equipment enclosure may alternatively be referred to as the enclosure. The equipment enclosure is an enclosure devised for housing at least the hydraulic power unit and optionally further control equipment of the wind propulsion system. The equipment enclosure may be a closed enclosure such that the hydraulic power unit and the optional further control equipment is protected from the ambient environment of the marine vessel, such as from precipitation, low temperature, and high temperature. The equipment enclosure may be provided with climate control equipment, such as a heater, an air conditioner, etc.

The first hydraulic actuator may be a hydraulic cylinder or a hydraulic motor. The hydraulic power unit comprises a hydraulic pump, which may be driven e.g., by an electric motor. The hydraulic pump pressurises a hydraulic fluid, such as hydraulic oil, which circulates in a hydraulic system of the wind propulsion system. Thus, the hydraulic power produced by the hydraulic power unit is the pressurised hydraulic fluid.

The hydraulic conduits extending from the hydraulic power unit to the first hydraulic actuator may include two or more conduit portions. Some conduit portions may extend between the hydraulic power unit and connectors or coupling elements arranged as transition elements from an inside of the equipment enclosure and an outside of the enclosure. From the outside of the equipment enclosure, further the hydraulic conduit portions may extend between the equipment enclosure and the first hydraulic actuator.

According to embodiments, the wind engagement unit may comprise a wingsail, wherein the wingsail may comprise a main wingsail having an aerofoil shape and a flap having an aerofoil shape. The first hydraulic actuator may control a position of the main wingsail in relation to the base and/or a position of the flap in relation to the main wingsail. In this manner, a wind engagement unit in the form of a wingsail with a controllable flap may be provided, the first hydraulic actuator being configured to control the controllable flap and being powered by the hydraulic power unit from the equipment enclosure.

The wind propulsion system may comprise further hydraulic actuators for controlling one or more further controllable aspects of the wingsail, such as an angular position of the wingsail and thus, a direction of the propulsive force produced by the wingsail.

According to embodiments, the first hydraulic actuator may control the wind engagement unit between an upright position and a substantially horizontal position. In this manner, the wind engagement unit may be controlled by the first hydraulic actuator to take an upright position or a substantially horizontal position.

The upright position may be an active position, in which the wind engagement unit is positioned to propel the marine vessel. The substantially horizontal position may be an inactive position, in which the wind engagement unit does not contribute to propelling the vessel, at least not to any large extent.

In embodiments wherein the first hydraulic actuator controls the flap of a wingsail, one or more further hydraulic actuators may control the wind engagement unit between the upright position and the substantially horizontal position.

According to some embodiments, the wind propulsion system may comprise further hydraulic conduits extending from the hydraulic power unit to one or more hydraulic actuators of a further wind engagement unit, the further hydraulic conduits extending between the equipment enclosure and the one or more hydraulic actuators of the further wind engagement unit.

In this manner, the hydraulic power unit may supply hydraulic power to one or more hydraulic actuators of at least one further wind engagement unit of the relevant marine vessel.

According to some embodiments, the marine vessel installation may comprise at least one further wind propulsion system and one further equipment enclosure for each further wind propulsion system. Each further wind propulsion system may comprise a base and a wind engagement unit, the base of each further wind propulsion system being configured to be arranged at the deck structure of the marine vessel and to support the wind engagement unit of each further wind propulsion system. The wind engagement unit of each further wind propulsion system may comprise at least one movable portion that is displaceable in relation to the base. Each further wind propulsion system may further comprise at least one hydraulic actuator arranged to engage with the at least one movable portion for displacement thereof in relation to the base of the further wind propulsion system. Each further wind propulsion system may comprise a hydraulic power unit arranged in each further equipment enclosure, the hydraulic power unit being arranged for supplying hydraulic power at least to the at least one hydraulic actuator of the relevant further wind propulsion system. Each further wind propulsion system may further comprise further hydraulic conduits extending from the hydraulic power unit of respective of each further equipment enclosure to respective of the at least one hydraulic actuator of each further wind propulsion system, the further hydraulic conduits extending between each further equipment enclosure and respective of the at least one hydraulic actuator. In this manner, at least two separate modular wind propulsion systems may be provided for one marine vessel and the advantages of ease of installation and maintenance may be utilised for each of the wind propulsion system and the at least one further wind propulsion system.

According to a further aspect there is provided a marine vessel comprising a marine vessel installation according to any one of aspects and/or embodiments discussed herein.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 illustrates a marine vessel according to embodiments,
Fig. 2 schematically illustrates a marine vessel installation according to embodiments,
Fig. 3 schematically illustrates a wind engagement unit according to embodiments, and
Figs. 4a and 4b schematically illustrate a wind propulsion system according to embodiments.

### DETAILED DESCRIPTION

Aspects and/or embodiments of the invention will now be described more fully. Like numbers refer to like elements throughout. Well-known functions or constructions will not necessarily be described in detail for brevity and/or clarity.

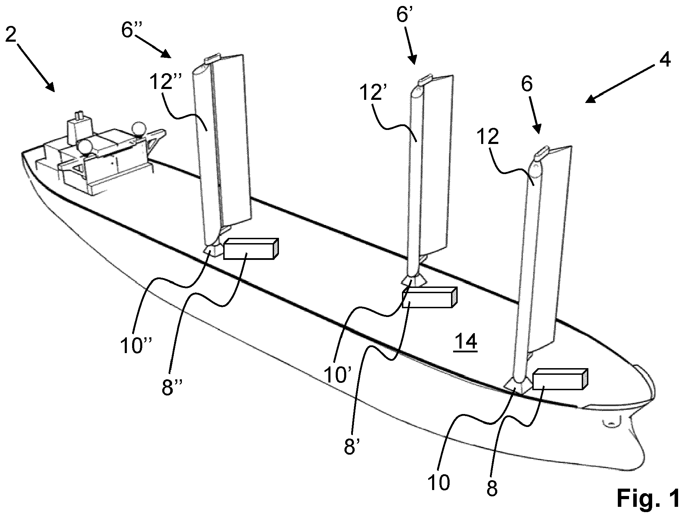

**Fig. 1** illustrates a marine vessel 2 according to embodiments.

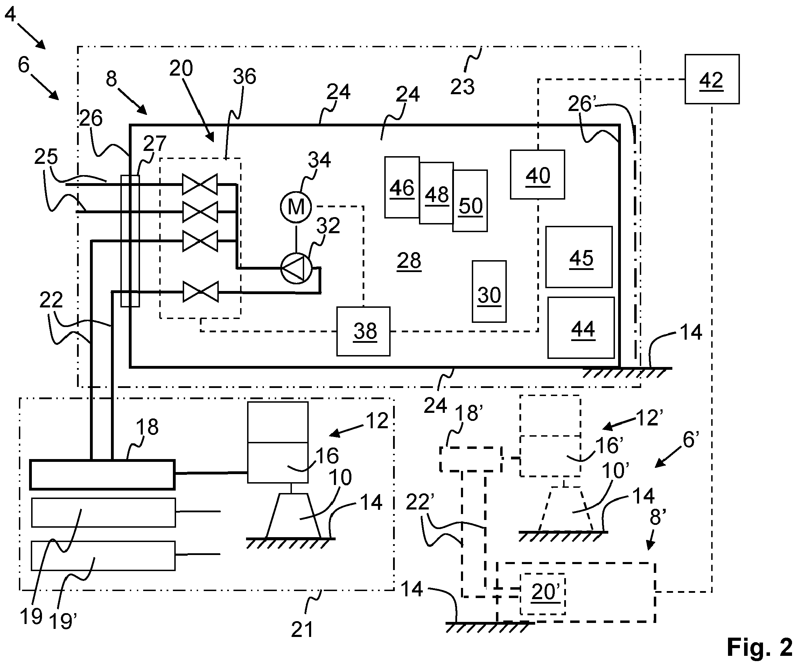

The marine vessel 2 comprises a marine vessel installation 4 according to any one of aspects and/or embodiments discussed herein, inter alia with reference to **Figs. 2** - **4b****.**

The marine vessel installation 4 comprises a wind propulsion system 6 and an equipment enclosure 8.

The wind propulsion system 6 comprises a base 10 and a wind engagement unit 12. The wind engagement unit 12 is configured to produce a force when subjected to wind, which force contributes to propelling the marine vessel 2. The base 10 is configured to be arranged at a deck structure 14 of the marine vessel 2 and to support the wind engagement unit 12. That is, the base 10 connects the wind engagement unit 12 to the marine vessel 2, such as to the deck of the marine vessel 2 in order to transfer the propelling force to the marine vessel 2.

The equipment enclosure 8 houses control equipment, such a hydraulic power unit, for at least a first hydraulic actuator at the base 10 and/or the wind engagement unit 12. The control equipment and the first hydraulic actuator are comprised in the wind propulsion system 6. See further below with reference to **Figs. 2** - **4b****.**

Hydraulic conduits (not shown) extend between the equipment enclosure 8 and the first hydraulic actuator.

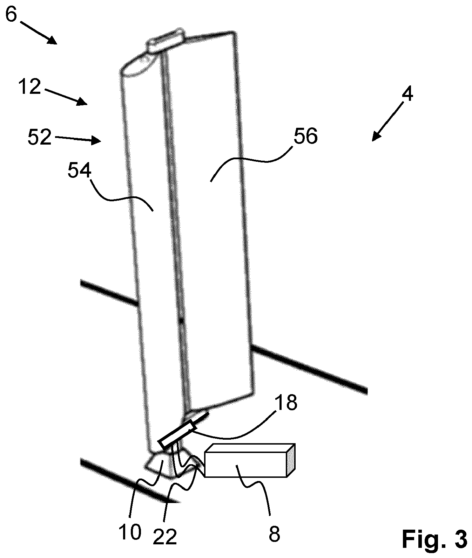

In the illustrated embodiments, the wind engagement unit 12 comprises a wingsail. The wingsail as a whole may form a movable portion and/or part of the wingsail, such as one or more flaps, may form a movable portion of the wingsail. Such movable portion/s is/are displaceable in relation to the base 10. For instance, the first hydraulic actuator may be arranged to engage with the movable portion for displacement thereof in relation to the base 10. See further below with reference to **Figs. 3- 4b****.**

In the illustrated embodiments, the marine vessel installation 4 comprises at least one further wind propulsion system 6', 6" and one further equipment enclosure 8', 8" for each further wind propulsion system 6', 6".

In the illustrated embodiments, the marine vessel installation 4 comprises three wind propulsion systems 6, 6', 6" and three equipment enclosures 8, 8', 8".

In alternative embodiments, the marine vessel installation may comprise less than three, such as one or two wind propulsion systems with thereto related equipment enclosures or more than three, such as within a range of 4 - 12, wind propulsion systems with thereto related equipment enclosures.

According to embodiments, the wind engagement unit 12 may be a wingsail, a rotor sail, a turbo sail, or similar device.

In the illustrated embodiments, the wind engagement unit 12 is a wingsail.

A rotor sail may utilise the so-called Magnus effect and may e.g., comprise a Flettner rotor. A turbo sail may sometimes be referred to as a suction sail. Other similar devices may e.g., comprise a kite or a wind turbine.

**Fig. 2** schematically illustrates a marine vessel installation 4 according to embodiments.

The marine vessel installation 4 may be a marine vessel installation 4 as discussed above with reference to **Fig. 1****.** Accordingly, in the following reference is also made to **Fig. 1****.**

Again, the marine vessel installation 4 comprises a wind propulsion system 6 and an equipment enclosure 8. The wind propulsion system 6 comprises a base 10 and a wind engagement unit 12. The base 10 is configured to be arranged at a deck structure 14 of a marine vessel and to support the wind engagement unit 12.

The wind engagement unit 12 comprises at least one movable portion 16 that is displaceable in relation to the base 10.

The wind propulsion system 6 further comprises at least a first hydraulic actuator 18 arranged to engage with the at least one movable portion 16 for displacement thereof in relation to the base 10.

The wind propulsion system 6 further comprises a hydraulic power unit 20 arranged in the equipment enclosure 8. The hydraulic power unit 20 is arranged for supplying hydraulic power at least to the first hydraulic actuator 18.

The wind propulsion system further comprises hydraulic conduits 22 extending from the hydraulic power unit 20 to the first hydraulic actuator 18. The hydraulic conduits 22 extend between the enclosure 8 and the first hydraulic actuator 18.

A modular marine vessel installation 4 is provided by the base 10, the wind engagement unit 12, and the first hydraulic actuator 18 forming part of a first module 21 and the equipment enclosure 8 with the hydraulic power unit 20 arranged therein forming part of a second module 23. In Fig. 2, the first and second modules 21, 23 are indicated with double-dotted-dashed lines.

Each of the first and second modules 21, 23 may be handled separately e.g., during mounting of the marine vessel installation 4 on a marine vessel. Once mounted, the hydraulic conduits 22 between the equipment enclosure 8 and the first hydraulic actuator 18 are connected and the marine vessel installation 4 is mechanically and hydraulically ready for operation aboard the marine vessel 2.

It may be noted that parts of the wind propulsion system 6 are distributed between the two modules 21, 23 to facilitate mounting and/or maintenance of the wind propulsion system 6. Specifically, hydraulic components of the wind propulsion system 6 are allocated either to the first module 21 including the base 10 and the wind engagement unit 12 or to the second module 23 including the enclosure 8. Typically, actuators of the wind engagement system 6, such as the first actuator 18 are allocated to the first module 21 and hydraulic power supplying and controlling equipment are allocated to the second module 23.

According to embodiments, such as the illustrated embodiments, the equipment enclosure 8 forms a movable module configured to be installed at the deck structure 14 of the marine vessel 2 for connection of the hydraulic conduits 22 extending between the equipment enclosure 8 and the first hydraulic actuator 18 of the wind propulsion system 6. In this manner, the equipment enclosure 8 may form a module, such as the above discussed first module 21, that can be installed and removed as one unit of the wind propulsion system 6. This facilitates installation and/or maintenance and/or replacement of the equipment enclosure 8.

As such, the enclosure 8 forming the movable module forms a separate entity that is movable e.g., with a crane. For instance, during installation of the equipment enclosure 8, the enclosure 8 may be lifted onto the deck structure 14 of the marine vessel 2. Similarly, for maintenance and/or replacement, the equipment enclosure 8 forming the movable module may be lifted from the deck structure 14 of the marine vessel 2.

According to embodiments, the equipment enclosure 8 may have outer dimensions of a standardised transportation container, such as of an ISO-container. In this manner, a standardised container size may be utilised for the equipment enclosure 8, which may facilitate handling of the enclosure 8. Namely, lifting and transporting arrangements for standardised transportation containers are readily available.

An ISO-container is a container of standardised size. ISO-containers come in various standardised sizes, such as 10, 20, 30, or 40 foot containers. A suitably sized ISO-container equipment enclosure having outer dimensions of a standardised transportation container may be selected depending on the space required for the hydraulic power unit 20 and any further equipment arranged within the equipment enclosure 8.

Within the outer dimensions of a standardised transportation container, such as an ISO-container, a shipping container, or intermodal container, the equipment enclosure may be structurally stronger than such a standardised container. For instance, a frame of the equipment enclosure may be stronger and wall elements may be stronger and/or better insulated than of an ISO-container.

Alternatively, the container may have different standardised outer dimensions than those of an ISO-container.

According to embodiments, such as the illustrated embodiments, the equipment enclosure 8 comprises a number of wall elements 24, 26, 26' enclosing a space 28. In this manner, the hydraulic power unit 20 and other equipment housed within the equipment enclosure 8 is arranged in a protected manner in the space 28 formed by the wall elements 24, 26, 26'.

According to embodiments, such as the illustrated embodiments, the equipment enclosure 8 has a cuboid-shape, wherein the number of wall elements 24, 26, 26' includes a first wall element 26 and a second wall element 26'. The first wall element 26 and the second wall element 26' form opposite side walls of the equipment enclosure 8. At least one of the first and second wall elements 26, 26' is openable or removable for providing access to the space 28 enclosed by the number of wall elements 24, 26, 26' inside of the equipment enclosure 8 and/or comprises an opening 30 providing access to the space 28. In this manner, access may be provided to the space 28 within the enclosure 8.

More specifically, providing for at least one of the first and second wall elements 26, 26' being openable or removable provides a large opening for moving equipment into, or out of, the enclosure 8. In the illustrated embodiments, the second wall element 26' is removable, as indicated by a dash-dotted line. For instance, the second wall element 26' may be bolted to a frame or other wall elements 24 of the equipment enclosure 8. An opening 30 providing access to the space 28 may be provided e.g., at one of the wall elements 24 forming a long side of the cuboid-shape. An openable and closable door may be provided at the opening 30. Through the opening 30 and the door, service personnel may enter the space 28 and access the equipment therein.

According to embodiments, such as the illustrated embodiments, the hydraulic power unit 20 comprises a hydraulic pump 32, an electric motor 34 arranged to drive the hydraulic pump 32, and a control arrangement 36, and wherein the control arrangement 36 is configured at least for controlling supply of hydraulic fluid to and from the first hydraulic actuator 18. In this manner, provisions for controlling the first hydraulic actuator 18 may be provided.

The control arrangement 36 of the hydraulic power unit 20 may comprise valves for directing hydraulic fluid to and from chambers within the first hydraulic actuator 18 to control actuation of one or more aspects of the wind engagement unit 12 by means of the first hydraulic actuator 18. A control unit 38 for the hydraulic power unit 20 may be form part of the control arrangement 36 and optionally, may also be configured for controlling the electric motor 34.

The hydraulic power unit 20 may comprise more than one hydraulic pump and/or electric motors.

The hydraulic power unit 20 and the first hydraulic actuator 18 form part of a hydraulic system of the wind propulsion system 6. The hydraulic fluid, such as hydraulic oil, is circulated by the hydraulic power unit 20 within the hydraulic system.

The hydraulic system and accordingly, the wind propulsion system 6, may comprise further hydraulic components, such as one or more further hydraulic actuators 19, 19' arranged for controlling further aspects of the wind engagement unit 12, a hydraulic fluid tank (not shown), and further hydraulic conduits 25 extending from the hydraulic power unit 20 e.g. to the one or more further hydraulic actuators 19, 19'.

Each of the hydraulic conduits 22 extending from the hydraulic power unit 20 to the first hydraulic actuator 18 may include two or more conduit portions. At least one of such conduit portions extends within the enclosure 8 and at least one such conduit portion extends outside the enclosure 8. Standard connectors or coupling elements 27 are arranged as transition elements between an inside of the equipment enclosure 8 and an outside thereof and accordingly, between conduit portions extending within the enclosure 8 and conduit portions extending outside the enclosure 8. In **Fig. 2****,** the connectors or coupling elements 27 are schematically indicated.

Thus, conduit portions of the hydraulic conduits 22 may already be installed between the hydraulic power unit 20 and the connectors or coupling elements 27 when the equipment enclosure 8 is mounted aboard the marine vessel 2. Once the enclosure 8 mounted aboard the marine vessel, conduit portions of the hydraulic conduits 22 may be connected between the connectors or coupling elements 27 and the first hydraulic actuator 18.

According to embodiments, the marine vessel installation 4 may comprise a control arrangement 40 for the wind propulsion system 6. The control arrangement 40 for the wind propulsion system 6 may be connected to a control arrangement 42 of the marine vessel and to the control arrangement 36 of the hydraulic power unit 20 and may be configured for applying control signals to the control arrangement 36 of the hydraulic power unit 20 based on signals from the control arrangement 42 of the marine vessel 2. In this manner, the control arrangement 40 for the wind propulsion system 6 may form an interface for higher system level commands and/or information from the control arrangement 42 of the marine vessel to the control arrangement 36 of the hydraulic power unit 20.

Since the control arrangement 40 for the wind propulsion system 6 is connected to the control arrangement 42 of the marine vessel, the control arrangement 40 for the wind propulsion system 6 may communicate with the control arrangement 42 of the marine vessel 2.

The control arrangement 42 of the marine vessel may send commands to the control arrangement 40 for the wind propulsion system 6, such as: "activate wind propulsion system", "deactivate wind propulsion system", "provide maximum propulsive power", "provide 50% of maximum propulsive power".

The control arrangement 42 of the marine vessel may send information to the control arrangement 40 for the wind propulsion system 6, such as: "wind direction 180 degrees", "wind speed 15 km/h", "vessel traveling direction". Alternatively, or additionally, the control arrangement 40 for the wind propulsion system 6 may be connected to sensors that provide information to the control arrangement 40 for the wind propulsion system 6, such as an anemometer.

Based on the commands and optionally the information provided by the control arrangement 42 of the marine vessel or by the sensors of the control arrangement 40 for the wind propulsion system 6, the control arrangement 40 for the wind propulsion system 6 is configured for applying control signals to the control arrangement 36 of the hydraulic power unit 20 to implement the commands from the control arrangement 42 of the marine vessel.

For instance:
- In response to the command "activate wind propulsion system", the control arrangement 40 for the wind propulsion system 6 applies control signals to the control arrangement 36 of the hydraulic power unit 20, which control signals cause the control arrangement 36 of the hydraulic power unit 20 to operate the first hydraulic actuator 18 and/or one or more other hydraulic actuators for positioning the wind engagement unit 12 in and active position for propelling the marine vessel 2.
- In response to the command "deactivate wind propulsion system", the control arrangement 40 for the wind propulsion system 6 applies control signals to the control arrangement 36 of the hydraulic power unit 20, which control signals cause the control arrangement 36 of the hydraulic power unit 20 to operate the first hydraulic actuator 18 and/or one or more other hydraulic actuators for positioning the wind engagement unit 12 in and inactive position, in which the wind engagement unit 12 does not contribute to any large extent to propelling the marine vessel 2.
- In response to the command "provide maximum propulsive power" and with information about wind direction, optionally wind speed, and marine vessel 2 travelling direction, the control arrangement 40 for the wind propulsion system 6 applies control signals to the control arrangement 36 of the hydraulic power unit 20, which control signals cause the control arrangement 36 of the hydraulic power unit 20 to operate the first hydraulic actuator 18 and/or one or more other hydraulic actuators for positioning the wind engagement unit 12 and/or a portion thereof in a position providing maximum propulsive power under current wind and travelling conditions.
- In response to the command "provide 50% of maximum propulsive power" and with information about wind direction, optionally wind speed, and marine vessel 2 travelling direction, the control arrangement 40 for the wind propulsion system 6 applies control signals to the control arrangement 36 of the hydraulic power unit 20, which control signals cause the control arrangement 36 of the hydraulic power unit 20 to operate the first hydraulic actuator 18 and/or one or more other hydraulic actuators for positioning the wind engagement unit 12 and/or a portion thereof in a position which provides approximately half of the maximum propulsive power that could be produced by the wind engagement unit 12 under current wind and travelling conditions.

The control arrangement 40 for the wind propulsion system 6 comprises a calculation unit which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression calculation unit may represent a processing circuitry comprising a plurality of processing circuits, such as, e.g., any, some or all of the ones mentioned above. The control arrangement 40 may comprise a memory unit. The calculation unit is connected to the memory unit, which provides the calculation unit with, for example, the stored programme code and/or stored data which the calculation unit needs to enable it to do calculations. The calculation unit may also be adapted to storing partial or final results of calculations in the memory unit. The memory unit may comprise a physical device utilised to store data or programs, i.e., sequences of instructions, on a temporary or permanent basis. The stored program code may be configured for executing commands from the control arrangement 42 of the marine vessel 2 and apply them to the control arrangement 36 of the hydraulic power unit 20. The stored program code may be configured for interpreting information from the control arrangement 42 of the marine vessel 2 and/or sensors of the control arrangement 40 for the wind propulsion system 6. The control arrangement 40 for the wind propulsion system 6 comprises communication interface circuitry configured for communicating with the control arrangement 42 of the marine vessel 2 and the control arrangement 36 of the hydraulic power unit 20.

According to embodiments, such as the illustrated embodiments, the marine vessel installation 4 comprises one or more of a battery power bank 44, an electric generator 45, a cooling unit 46, a heating unit 48, and an air dehumidifier 50 arranged within the equipment enclosure 8. In this manner, back-up power may be provided to the wind propulsion system 6 and/or air conditioning equipment may be provided for obtaining suitable operating conditions for the hydraulic power unit 20 and other equipment within the equipment enclosure 8.

With reference to **Figs. 1** and **2****,** embodiments comprising more than one wind propulsion system 6, 6', 6" are discussed.

As shown in **Fig. 1** and as indicated with broken lines in **Fig. 2****,** the marine vessel installation 4 may comprise at least one further wind propulsion system 6', 6" and one further equipment enclosure 8', 8" for each further wind propulsion system 6', 6".

Each further wind propulsion system 6', 6" comprises a base 10', 10" and a wind engagement unit 12', 12", the base 10', 10" of each further wind propulsion system 6', 6" being configured to be arranged at the deck structure 14 of the marine vessel 2 and to support the wind engagement unit 12', 12" of each further wind propulsion system 6',6".

The wind engagement unit 12', 12" of each further wind propulsion system 6', 6" comprises at least one movable portion 16' that is displaceable in relation to the base 10', 10" of each further wind propulsion system 6', 6". Each further wind propulsion system 6', 6" further comprises at least one hydraulic actuator 18' arranged to engage with the at least one movable portion 16' of respective of each further wind propulsion system 6', 6" for displacement of the at least one movable portion 16' in relation to the base 10', 10" of each further wind propulsion system 6', 6".

Each further wind propulsion system 6', 6"comprises a hydraulic power unit 20' arranged in each further equipment enclosure 8', 8", the hydraulic power unit 20' of each further wind propulsion system 6', 6" being arranged for supplying hydraulic power at least to the at least one hydraulic actuator 18' of the relevant further wind propulsion system 6', 6".

Each further wind propulsion system 6', 6" comprises further hydraulic conduits 22' extending from the hydraulic power unit 20' of respective of each further equipment enclosure 8', 8" to respective of the at least one hydraulic actuator 18' of each further wind propulsion system 6', 6", the further hydraulic conduits 22' extending between each further equipment enclosure 8', 8" and respective of the at least one hydraulic actuator 18' of each further wind propulsion system 6', 6".

In **Fig. 2** only one further wind propulsion system 6' and one further equipment enclosure 8' are shown. Further non-shown further wind propulsion systems and associated further equipment enclosures may correspond to the shown wind propulsion system 6 and further wind propulsion system 6', as well as equipment enclosure 8, and further equipment enclosure 8'.

Each of the further wind propulsion systems 6', 6" and further equipment enclosures 8', 8" may comprise corresponding components, equipment, portions, and parts as shown in connection with the wind propulsion system 6 and the equipment enclosures 8.

In alternative embodiments, the hydraulic power unit 20 of the wind propulsion system 6 may supply hydraulic power to at least one further wind engagement unit 12' of the relevant marine vessel. Accordingly, in such embodiments, one equipment enclosure 8 may be provided for the wind engagement unit 12 and the at least one further wind engagement unit 12'. Dedicated hydraulic conduits may extend from the hydraulic power unit to the first hydraulic actuator of the at least one further wind engagement unit, the dedicated hydraulic conduits extending between the equipment enclosure and the first hydraulic actuator of the at least one further wind engagement unit.

Fig. 3 schematically illustrates a wind engagement unit 12 according to embodiments.

The wind engagement unit 12 may be a wind engagement unit 12 of a wind propulsion system 6 as discussed above with reference to **Figs. 1** **and** **2****.** Accordingly, in the following, reference is also made to **Figs. 1** **and** **2****.**

Again, the wind propulsion system 6 and an equipment enclosure 8 are comprised in a marine vessel installation 4. Again, the wind engagement unit 12 is supported by a base 10 and the wind propulsion system 6 comprises a first hydraulic actuator 18.

The wind engagement unit 12 comprises a wingsail 52. The wingsail 52 comprises a main wingsail 54 having an aerofoil shape and a flap 56 having an aerofoil shape.

The first hydraulic actuator 18 is arranged to control a position of the main wingsail 54 in relation to the base 10 and/or a position of the flap 56 in relation to the main wingsail 54 and/or the base 10. The first hydraulic actuator 18 is configured to control the position of the main wingsail 54 and/or the flap 56 by hydraulic power supplied via hydraulic conduits 22 from a hydraulic power unit arranged in the equipment enclosure 8.

According to some embodiments, the wingsail may comprise one or more further flaps or other wingsail aerofoil modifying members. Further hydraulic actuators may be arranged for controlling the position of such further one or more flaps or other wingsail aerofoil modifying members.

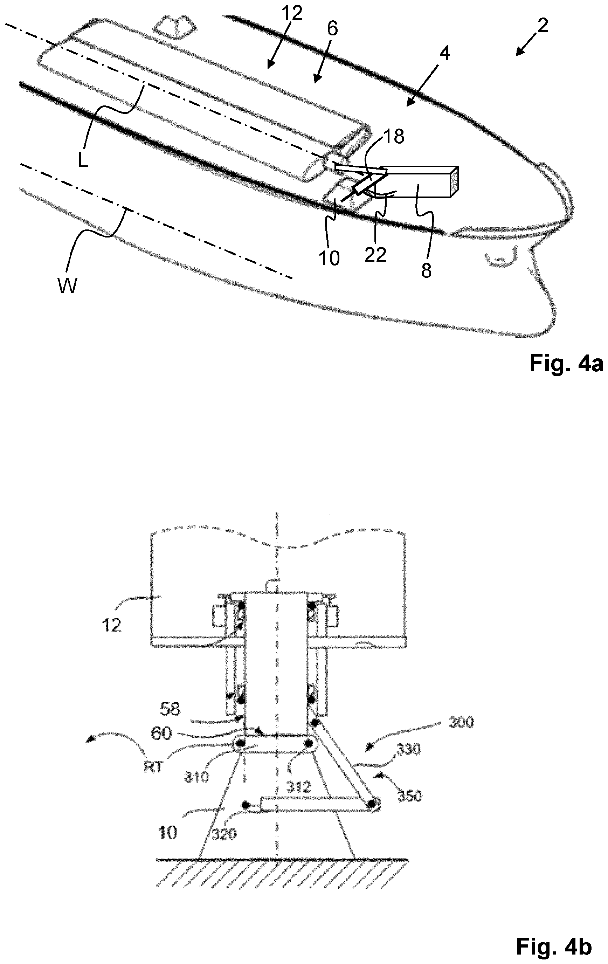

**Figs. 4a and 4b** schematically illustrate a wind propulsion system 6 according to embodiments. In **Fig. 4a** a wind engagement unit 12 of the wind propulsion system 6 is shown in a substantially horizontal position aboard a marine vessel 2. In **Fig. 4b** a portion of the wind engagement unit 12 is shown in an upright position.

The wind propulsion system 6 may be a wind propulsion system 6 as discussed above with reference to **Figs. 1** **and** **2****.** Accordingly, in the following, reference is also made to **Figs. 1** **and** **2****.**

Again, the wind propulsion system 6 and an equipment enclosure 8 are comprised in a marine vessel installation. Again, the wind engagement unit 12 is supported by a base 10 and the wind propulsion system 6 comprises a first hydraulic actuator 18.

The upright position of the wind engagement unit 12 is an active position, in which the wind engagement unit 12 is positioned to contribute to propelling the marine vessel 2. The substantially horizontal position of the wind engagement unit 12 is an inactive position, in which the wind engagement unit 12 does not contribute to propelling the vessel 2, at least not to any large extent. The substantially horizontal position may be a position wherein a longitudinal axis L of the wind engagement 12 is arranged at an angel within a range of +/-15 degrees to a waterline W of the marine vessel 2.

According to these embodiments, the first hydraulic actuator 18 is arranged to control the wind engagement unit 12 between the upright position and the substantially horizontal position. The upright position of the wind engagement unit 12 is also shown in **Fig. 1****.**

The first hydraulic actuator 18 is configured to control the position of the wind engagement unit 12 by supplying hydraulic power via hydraulic conduits 22 from a hydraulic power unit arranged in the equipment enclosure 8.

**Fig. 4b** schematically shows a tilting arrangement 300 configured for controlling the wind engagement unit 12 between its upright and substantially horizontal positions.

The tilting arrangement 300 is associated with the base 10 and a shaft 58, which is connected to the wind engagement unit 12. The shaft 58 is connected at its lower end 60 to a tilting means 310 having a rotation axis RT in respect of which the wind engagement unit 12 can be tilted in the direction shown by the arrow RT. The tilting means 310 is in turn connected to the based 10 via the rotation axis RT.

The tilting means 310 further comprises a locking means 312, which prevents the tilting of the wind engagement unit 12 and fixes the shaft 58 and thus, the wind engagement unit 12 to the upright position. The locking means 312 is released, when the wind engagement unit 12 is to be tilted.

The tilting arrangement 300 further comprises a tilting drive 350 comprising the first hydraulic actuator 18 in the form of a hydraulic cylinder connected to the base 10. At its opposite end, the first hydraulic actuator 18 is rotatably connected to a torque transmitting shaft 330, which is further connected to the shaft 58.

When the wind engagement unit 12 is to be tilted, the locking means 312 is released. By extending the first hydraulic actuator 18, the torque transmitting shaft 330 pushes the shaft 58 to rotate about the rotation axis RT. In this way, the wind engagement unit 12 connected to the shaft 58 is tilted about the rotation axis RT to the substantially horizontal position shown in **Fig. 4a****.**

As an alternative to the first hydraulic actuator 18, one or more further hydraulic actuators (not shown) may control the wind engagement unit 12 between the upright position and the substantially horizontal position. In such embodiments, the first hydraulic actuator may instead control a position of a main wingsail in relation to the base 10 and/or a position of a flap 56 of the wingsail in relation to the main wingsail, as discussed above with reference to **Fig. 3****.**

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A marine vessel installation (4) comprising a wind propulsion system (6) and an equipment enclosure (8), wherein
the wind propulsion system (6) comprises a base (10) and a wind engagement unit (12), the base (10) being configured to be arranged at a deck structure (14) of a marine vessel (2) and to support the wind engagement unit (12), and the wind engagement unit (12) comprising at least one movable portion (16) that is displaceable in relation to the base (10), wherein
the wind propulsion system (6) further comprises at least a first hydraulic actuator (18) arranged to engage with the at least one movable portion (16) for displacement thereof in relation to the base (10), wherein
the wind propulsion system (6) further comprises a hydraulic power unit (20) arranged in the equipment enclosure (8), the hydraulic power unit (20) being arranged for supplying hydraulic power at least to the first hydraulic actuator (18), and wherein
the wind propulsion system (6) further comprises hydraulic conduits (22) extending from the hydraulic power unit (20) to the first hydraulic actuator (18), the hydraulic conduits (22) extending between the equipment enclosure (8) and the first hydraulic actuator (18).

2. The marine vessel installation (4) according to claim 1, wherein the equipment enclosure (8) comprises a number of wall elements (24, 26, 26') enclosing a space (28).

3. The marine vessel installation (4) according to claim 2, wherein the equipment enclosure (8) has a cuboid-shape, wherein
the number of wall elements (24, 26, 26') includes a first wall element (26) and a second wall element (26'), wherein
the first wall element (26) and the second wall element (26') form opposite side walls of the equipment enclosure (8), and wherein
at least one of the first and second wall elements (24, 26, 26') is openable or removable for providing access to the space (28) enclosed by the number of wall elements (24, 26, 26') inside of the equipment enclosure (8) and/or comprises an opening (30) providing access to the space (28).

4. The marine vessel installation (4) according to any one of the preceding claims, wherein the equipment enclosure (8) forms a movable module configured to be installed at the deck structure (14) of the marine vessel (2) for connection of the hydraulic conduits (22) extending between the equipment enclosure (8) and the first hydraulic actuator (18) of the wind propulsion system (6).

5. The marine vessel installation (4) according to any one of the preceding claims, wherein the equipment enclosure (8) has outer dimensions of a standardised transportation container, such as of an ISO-container.

6. The marine vessel installation (4) according to any one of the preceding claims, comprising one or more of a battery power bank (44), an electric generator (45), a cooling unit (46), a heating unit (48), and an air dehumidifier (50) arranged within the equipment enclosure (8).

7. The marine vessel installation (4) according to any one of the preceding claims, wherein the wind engagement unit (12) is a wingsail, a rotor sail, a turbo sail, or similar device.

8. The marine vessel installation (4) according to any one of the preceding claims, wherein the wind engagement unit (12) comprises a wingsail (52), wherein
the wingsail (52) comprises a main wingsail (54) having an aerofoil shape and a flap (56) having an aerofoil shape, and wherein
the first hydraulic actuator (18) controls a position of the main wingsail (54) in relation to the base (10) and/or a position of the flap (56) in relation to the main wingsail (54) and/or the base (10).

9. The marine vessel installation (4) according to any one of claims 1 - 7, wherein the first hydraulic actuator (18) controls the wind engagement unit (12) between an upright position and a substantially horizontal position.

10. The marine vessel installation (4) according to any one of the preceding claims, wherein the hydraulic power unit (20) comprises a hydraulic pump (32), an electric motor (34) arranged to drive the hydraulic pump (32), and a control arrangement (36), and wherein
the control arrangement (36) is configured at least for controlling supply of hydraulic fluid to and from the first hydraulic actuator (18).

11. The marine vessel installation (4) according to claim 10, comprising a control arrangement (40) for the wind propulsion system (6), wherein
the control arrangement (40) for the wind propulsion system (6) is connected to a control arrangement (42) of the marine vessel (2) and to the control arrangement (36) of the hydraulic power unit (20) and is configured for applying control signals to the control arrangement (36) of the hydraulic power unit (20) based on signals from the control arrangement (42) of the marine vessel (2).

12. The marine vessel installation (4) according to any one of the preceding claims, comprising at least one further wind propulsion system (6', 6") and one further equipment enclosure (8', 8") for each further wind propulsion system (6', 6'), wherein
each further wind propulsion system (6', 6') comprises a base (10', 10') and a wind engagement unit (12', 12"), the base (10', 10") of each further wind propulsion system (6', 6') being configured to be arranged at the deck structure (14) of the marine vessel (2) and to support the wind engagement unit (12', 12") of each further wind propulsion system (6', 6'), and the wind engagement unit (12', 12") of each further wind propulsion system (6', 6') comprising at least one movable portion (16') that is displaceable in relation to the base (10', 10"), wherein
each further wind propulsion system (6', 6") further comprises at least one hydraulic actuator (18') arranged to engage with the at least one movable portion (16') for displacement thereof in relation to the base (10', 10") of the further wind propulsion system (6', 6"), wherein
each further wind propulsion system (6', 6") comprises a hydraulic power unit (20') arranged in each further equipment enclosure (8', 8"), the hydraulic power unit (20') being arranged for supplying hydraulic power at least to the at least one hydraulic actuator (18') of the relevant further wind propulsion system (6', 6"), and wherein
each further wind propulsion system (6', 6") further comprises further hydraulic conduits (22') extending from the hydraulic power unit (20') of respective of each further equipment enclosure (8', 8") to respective of the at least one hydraulic actuator (18') of each further wind propulsion system (6', 6"), the further hydraulic conduits (22') extending between each further equipment enclosure (8', 8") and respective of the at least one hydraulic actuator (18').

13. A marine vessel (2) comprising a marine vessel installation (4) according to any one of the preceding claims.
